# FASCICULE DE BREVET EUROPEEN

(11) **EP 2 507 070 B1**
(45) Date de publication et mention de la délivrance du brevet: **09.10.2013**
(21) Numéro de dépôt: 10784786.5
(22) Date de dépôt: 29.11.2010
(51) Int. Cl.: B60C 9/08, D07B 1/06

(54) **PNEUMATIQUE COMPORTANT DES CABLES D'ARMATURE DE CARCASSE PRESENTANT DES PERMEABILITES DIFFERENTES**
REIFEN MIT KARKASSENVERSTÄRKUNGSSEILEN MIT UNTERSCHIEDLICHEM PERMEABILITÄTSGRAD
TIRE COMPRISING CARCASS REINFORCEMENT CABLES HAVING DIFFERENT DEGREES OF PERMEABILITY

(30) Priorité: 04.12.2009 FR 0958652
(43) Date de publication de la demande: 10.10.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DOMINGO, Alain, F-63190 Orleat (FR)
(74) Mandataire: Le Cam, Stéphane Georges Elie
(86) Numéro de dépôt international: PCT/EP2010/068408
(87) Numéro de publication internationale: WO 2011/067206

(56) Documents cités:
- WO-A1-99/31313
- FR-A1- 2 795 751
- FR-A1- 2 864 556

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter voire éliminer le passages des agents oxydants par les canaux formés au sein des câbles. Des pneumatiques ainsi réalisés ont mis en évidence, des problèmes d'apparition de poche d'air lors de la fabrication du pneumatique.

En effet, les différentes étapes de fabrication conduisent à la formation, de poches d'air occlus. Dans le cas de pneumatiques comportant une armature de carcasse formée de câbles dont la structure forme des canaux pouvant conduire l'air, ces poches d'air disparaissent du fait de la diffusion de l'air dans les matériaux notamment au travers desdits canaux existant au sein des câbles. Dans le cas de pneumatiques comportant une armature de carcasse formée de câbles dont la structure est fortement pénétrée par le caoutchouc, ces poches d'air subsistent à l'issue des étapes de fabrication. Il apparaît uniquement un déplacement de ces poches d'air durant l'étape de cuisson du pneumatique, celles étant déplacées vers des zones où s'exercent une faible pression. Le déplacement de l'air se fait le long de l'armature de carcasse suivant des passages existant entre les éléments de renforcement, les couches de mélange caoutchouteux couvrant les éléments de renforcement formant des zones de renfoncement parallèles aux éléments de renforcement avant l'étape de cuisson du pneumatique. Ces zones de renfoncement autorisent ainsi l'air à se déplacer légèrement en fonction de la pression qui s'exerce sur les régions où se trouvent les poches d'air. La pression ou les variations de pression interviennent notamment lors de l'étape de cuisson du pneumatique ou bien durant l'étape de conformation si celle-ci existe.

L'apparition de ces poches d'air est le plus souvent rédhibitoire selon leur localisation et peuvent nécessiter la mise au rebus des pneumatiques, celles-ci pouvant devenir des zones de fragilité du pneumatique. Les coûts de fabrication deviennent alors inacceptables du simple fait des mauvais rendements en production.

Les inventeurs se sont ainsi donnés pour mission de fournir des pneumatiques pour véhicules lourds de type "Poids-Lourds", dont les performances d'usure sont conservées pour des usages routiers et dont les performances notamment d'endurance sont améliorées notamment au regard des phénomènes de "fatigue-corrosion" ou de "fatigue-fretting-corrosion", quelles que soient les conditions de roulage notamment en termes de gonflage et dont le coût de fabrication reste acceptable.

Ce but a été atteint selon l'invention par un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, au moins 85 % des éléments de renforcement métalliques d'au moins une couche de l'armature de carcasse étant des câbles métalliques non frettés présentant au test dit de perméabilité un débit inférieur à 20 cm³/mn et au moins 5 % des éléments de renforcement de ladite au moins une couche de l'armature de carcasse étant des câbles comportant au moins un brin constitué de fibres multifilamentaires textiles.

Les câbles sont soit des câbles à torons soit des câbles à couches, soit des câbles à torons de câbles à couches soit des câbles à couches comportant des torons.

Des câbles à torons sont des câbles constitués de brins ou fils retordus ensembles.

Des câbles dits "à couches" (*"layered cords"*) ou "multicouches" sont des câbles constitués d'un noyau central et d'une ou plusieurs couches de brins ou fils pratiquement concentriques disposées autour de ce noyau central.

Les câbles à couches les plus répandus dans les carcasses de pneumatiques Poids-lourd sont des câbles de formule (L+M) ou (L+M+N), les derniers étant généralement destinés aux plus gros pneumatiques. Ces câbles sont formés de manière connue d'un noyau de L fil(s) entouré d'une couche de M fils, l'ensemble L+M formant l'âme du câble, elle-même entourée d'une couche externe de N fils, avec en général L variant de 1 à 4, M variant de 3 à 12, N variant de 8 à 20. Le cas échéant, l'ensemble peut être fretté par un fil de frette externe enroulé en hélice autour de la dernière couche.

Les câbles sont obtenus à partir de brin ou fil constitué de fibres multifilamentaires (« multifilament yarns »), ces brins ou fils pouvant être retordus ou non sur eux-mêmes ou à partir de fils unitaires tels que des monofils cylindriques ou oblongs, avec ou sans torsion sur eux-mêmes.

Les câbles peuvent être de type hybrides, c'est-à-dire composites, lorsqu'ils comportent des éléments de natures différentes.

Selon un mode de réalisation préférée de l'invention, les fibres multifilamentaires textiles sont de type polyamide et de préférence encore de type polyamide aromatique pour retrouver des propriétés mécaniques les plus proches possibles de celles des fils métalliques.

Si des polyamides aliphatiques ne sont pas exclues, elles peuvent présenter des inconvénients dans certains cas, notamment du fait de possibles phénomènes de retrait.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Des câbles présentant au test dit de perméabilité un débit inférieur à 2 cm3/mn présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de touts les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention conduit à des améliorations en termes de compromis endurance et coûts de fabrication très intéressants. En effet, les propriétés d'endurance avec un tel pneumatique sont équivalentes avec les solutions évoquées ci-dessus. La présence d'au moins 85 % de câbles de l'armature de carcasse présentant au test dit de perméabilité un débit inférieur à 20 cm³/mn permettent de limiter les risques liés à la corrosion. En outre, la présence d'au moins 5 % de câbles comportant au moins un brin constitué de fibres multifilamentaires textiles permet de drainer l'air occlus lors de la fabrication du pneumatique et donc conduit à une productivité supérieure à celle évoquée précédemment et donc à des coûts plus intéressants. Les inventeurs ont su mettre en évidence qu'un nombre de câbles comportant au moins un brin constitué de fibres multifilamentaires textiles compris entre 5 et 15 % permet à l'air occlus de rencontrer un « drain » soit dès la formation d'une poche d'air, soit lors d'un déplacement de ladite poche d'air selon une direction parallèle aux éléments de renforcement de la couche d'armature de carcasse durant les étapes de fabrication du pneumatique comme il l'a été évoqué précédemment. Les essais réalisés ont confirmé que les résultats obtenus avec de câbles comportant au moins un brin constitué de fibres multifilamentaires textiles dans ces proportions sont sans commune mesure avec ceux obtenus avec des couches d'armature de carcasse ne comportant que des câbles présentant au test dit de perméabilité un débit inférieur à 20 cm³/mn. En effet, la présence d'au moins 5 % de câbles comportant au moins un brin constitué de fibres multifilamentaires textiles a permis de conserver la quasi-totalité des pneumatiques ainsi fabriqués et donc ramener le coût unitaire de fabrication à des valeurs acceptables.

Selon une première variante de réalisation de l'invention, lesdits au moins 5 % de câbles comportant au moins un brin constitué de fibres multifilamentaires textiles sont des câbles textiles, c'est-à-dire qu'ils sont uniquement constitués de brins ou fils textiles. Selon cette variante de réalisation, leur nombre est de préférence inférieur à 10 % des éléments de renforcement de ladite au moins une couche de l'armature de carcasse.

Selon une deuxième variante de réalisation de l'invention, lesdits au moins 5 % de câbles sont des câbles hybrides comportant des brins ou fils textiles et des brins ou fils métalliques. La présence d'au moins une partie de brins ou fils métalliques dans lesdits au moins 5 % de câbles permet de conférer des propriétés mécaniques plus proches de celles d'un câble métallique. Selon cette deuxième variante de réalisation, leur nombre est de préférence supérieur à 10 % des éléments de renforcement de ladite au moins une couche de l'armature de carcasse pour assurer le total drainage de l'air occlus durant la phase de fabrication.

De préférence encore, selon cette deuxième variante de réalisation de l'invention, lesdits au moins 5 % des éléments de renforcement de ladite au moins une couche de l'armature de carcasse sont des câbles à couches hybrides dont le noyau comporte au moins un brin ou fil constitué de fibres multifilamentaires textiles, les brins des couches intermédiaire et/ou externe étant métalliques.

De préférence encore, lesdits au moins 5 % des éléments de renforcement de ladite au moins une couche de l'armature de carcasse sont des câbles hybrides du type 1+M+N, c'est-à-dire que le noyau correspond à un seul fil ou brin constitué de fibres multifilamentaires textiles, les brins des couches intermédiaire et externe étant métalliques.

Avantageusement encore, selon cette deuxième variante de réalisation de l'invention, lesdits au moins 85 % de câbles de l'armature de carcasse présentant au test dit de perméabilité un débit inférieur à 20 cm³/mn sont des câbles à couches métalliques de même formule que lesdits au moins 5 % de câbles hybrides.

Dans le cas d'une armature de carcasse comportant plusieurs couches d'éléments de renforcement, chacune desdites couches peut être conforme à l'invention. Avantageusement au moins la couche radialement extérieure comporte au moins 85 % de câbles métalliques non frettés présentant au test dit de perméabilité un débit inférieur à 20 cm³/mn et au moins 5 % de câbles comportant au moins un brin constitué de fibres multifilamentaires textiles. Ce choix est particulièrement avantageux pour assurer une évacuation complète des poches d'air qui se forment lors de la fabrication du pneumatique, celles-ci apparaissant essentiellement sur la surface axialement et/ou radialement extérieure de l'armature de carcasse lors de la fabrication.

Selon un mode de réalisation avantageux de l'invention, lesdits au moins 85 % des éléments de renforcement métalliques d'au moins une couche de l'armature de carcasse sont des câbles à au moins deux couches, au moins une couche interne étant gainée d'une couche constituée d'une composition polymérique telle qu'une composition de caoutchouc réticulable ou réticulée, de préférence à base d'au moins un élastomère diénique.

De préférence encore selon l'invention, les câbles de l'armature de carcasse présentent au test dit de perméabilité un débit inférieur à 10 cm³/mn et de préférence encore inférieur à 2 cm³/mn.

L'invention propose encore un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, au moins 85 % des éléments de renforcement d'au moins une couche de l'armature de carcasse étant des câbles métalliques non frettés à au moins deux couches, au moins une couche interne étant gainée d'une couche constituée d'une composition polymérique telle qu'une composition de caoutchouc réticulable ou réticulée, de préférence à base d'au moins un élastomère diénique et au moins 5 % des éléments de renforcement de ladite au moins une couche de l'armature de carcasse étant des câbles comportant au moins un brin constitué de fibres multifilamentaires textiles.

Avantageusement encore selon l'invention, les câbles hybrides sont des câbles à au moins trois couches, au moins une couche intermédiaire étant gainée d'une couche constituée d'une composition polymérique telle qu'une composition de caoutchouc réticulable ou réticulée, de préférence à base d'au moins un élastomère diénique. Notamment, lorsque les brins des couches intermédiaire et externe sont métalliques, la couche constituée d'une composition polymérique évite les frottements entre les brins ou fils métalliques des différentes couches.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans le câble de l'invention :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, la présente invention est en premier lieu mise en oeuvre avec des élastomères diéniques essentiellement insaturés, en particulier du type (a) ou (b) ci-dessus.

Ainsi, l'élastomère diénique est préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

De préférence encore selon l'invention, l'élastomère diénique choisi est majoritairement (c'est-à-dire pour plus de 50 pce) constitué d'un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Selon un mode avantageux de l'invention, l'élastomère diénique choisi est exclusivement (c'est-à-dire pour 100 pce) constitué de caoutchouc naturel, de polyisoprène de synthèse ou d'un mélange de ces élastomères, le polyisoprène de synthèse ayant un taux (% molaire) de liaisons cis-1,4 de préférence supérieur à 90%, plus préférentiellement encore supérieur à 98%.

On pourrait aussi utiliser, selon un mode de réalisation particulier de l'invention, des coupages (mélanges) de ce caoutchouc naturel et/ou ces polyisoprènes de synthèse avec d'autres élastomères diéniques fortement insaturés, notamment avec des élastomères SBR ou BR tels que précités.

La gaine de caoutchouc du câble de l'invention peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères, par exemple des polymères thermoplastiques, ces polymères autres qu'élastomères étant alors présents à titre de polymère minoritaire.

Bien que la composition de caoutchouc de ladite gaine soit préférentiellement dépourvue de tout plastomère et qu'elle ne comporte qu'un élastomère (ou mélange d'élastomères) diénique(s) comme base polymérique, ladite composition pourrait aussi comprendre au moins un plastomère selon une fraction massique xₚ inférieure à la fraction massique x_{c} du(des) élastomère(s). Dans un tel cas, on a de préférence la relation suivante : 0 < xₚ < 0,5. xₑ, et plus préférentiellement: 0 < xₚ < 0,1. xₑ.

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

De préférence, la composition de la gaine de caoutchouc présente, à l'état réticulé, un module sécant en extension à 10% d'allongement (noté M10), mesuré selon la norme ASTM D 412 de 1998, inférieur à 20 MPa et plus préférentiellement inférieur à 12 MPa, en particulier entre 4 et 11 MPa.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

De préférence, ladite composition est à base de caoutchouc naturel et elle comprend du noir de carbone à titre de charge renforçante, par exemple un noir de carbone de grade (ASTM) 300, 600 ou 700 (par exemple N326, N330, N347, N375, N683, N772).

Selon une variante de l'invention, lesdits au moins 85 % de câbles d'au moins une couche de l'armature de carcasse présentant au test dit de perméabilité un débit inférieur à 20 cm³/mn sont des câbles métalliques à couches de construction [L+M] ou [L+M+N], comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

Dans la construction L+M+N selon l'invention, la couche intermédiaire C2 comporte de préférence six ou sept fils, et le câble conforme à l'invention présente alors les caractéristiques préférentielles suivantes (d₁, d₂, d₃, p₂ et p₃ en mm) :
- (i) 0,10 < d₁ < 0,28 ;
- (ii) 0,10 < d₂ < 0,25 ;
- (iii) 0,10 < d₃ < 0,25 ;
- (iv) M = 6 ou M = 7 ;
- (v) 5 π (d₁ + d₂) < p₂ ≤ p₃ < 5 π (d₁ + 2d₂ + d₃) ;
- (vi) les fils desdites couches C2, C3 sont enroulés dans le même sens de torsion (S/S ou Z/Z).

De préférence, la caractéristique (v) est telle que p₂ = p₃, de telle sorte que le câble est dit compact compte tenu par ailleurs de la caractéristique (vi) (fils des couches C2 et C3 enroulés dans le même sens).

Selon la caractéristique (vi), tous les fils des couches C2 et C3 sont enroulés dans le même sens de torsion, c'est-à-dire soit dans la direction S (disposition "S/S"), soit dans la direction Z (disposition "Z/Z"). L'enroulement dans le même sens des couches C2 et C3 permet avantageusement, dans le câble conforme à l'invention, de minimiser les frottements entre ces deux couches C2 et C3 et donc l'usure des fils qui les constituent (puisqu'il n'y a plus de contact croisé entre les fils).

De préférence, lesdits au moins 85 % de câbles d'au moins une couche de l'armature de carcasse présentant au test dit de perméabilité un débit inférieur à 20 cm³/mn sont des câbles à couches de construction notée 1+M+N, c'est-à-dire que la couche interne C1 est constituée d'un seul fil.

Avantageusement encore, les rapports (d₁/d₂) sont de préférence fixés dans des limites données, selon le nombre M (6 ou 7) de fils de la couche C2, comme suit :
pour M = 6 : 0,9 < (d₁ / d₂) < 1,3 ;
pour M = 7 : 1,3 < (d₁ / d₂) <1,6.

Une valeur trop faible du rapport d₁ / d₂ peut être préjudiciable à l'usure entre la couche interne et les fils de la couche C2. Une valeur trop élevée peut quant à elle nuire à la compacité du câble, pour un niveau de résistance en définitive peu modifié, ainsi qu'à sa flexibilité ; la rigidité accrue de la couche interne C1 due à un diamètre d₁ trop élevé pourrait être par ailleurs préjudiciable à la faisabilité elle-même du câble, lors des opérations de câblage.

Les fils des couches C2 et C3 peuvent avoir un diamètre identique ou différent d'une couche à l'autre. On utilise de préférence des fils de même diamètre (d₂=d₃), notamment pour simplifier le procédé de câblage et abaisser les coûts.

Le nombre maximal Nₘₐₓ de fils enroulables en une couche unique saturée C3 autour de la couche C2 est bien entendu fonction de nombreux paramètres (diamètre d₁ de la couche interne, nombre M et diamètre d₂ des fils de la couche C2, diamètre d₃ des fils de la couche C3).

Lesdits au moins 85 % de câbles d'au moins une couche de l'armature de carcasse présentant au test dit de perméabilité un débit inférieur à 20 cm³/mn sont de préférence choisis parmi les câbles de structure 1+6+10, 1+6+11, 1+6+12, 1+7+11, 1+7+12 ou 1+7+13.

Pour un meilleur compromis entre résistance, faisabilité et tenue en flexion du câble, d'une part, et pénétrabilité par le caoutchouc, d'autre part, on préfère que les diamètres des fils des couches C2 et C3, identiques ou non, soient compris entre 0,12 mm et 0,22 mm.

Dans un tel cas, on a plus préférentiellement les relations suivantes qui sont vérifiées :
0,14 < d₁ < 0,22 ;
0,12 < d₂ ≤ d₃ < 0,20;
5 < p₂ ≤ p₃ < 12 (pas en mm réduits) ou bien 20 < p₂ ≤ p₃ < 30 (pas en mm élevés).

Un diamètre inférieur à 0,19 mm permet de réduire le niveau des contraintes subies par les fils lors des variations importantes de courbure des câbles, alors qu'on choisit de préférence des diamètres supérieurs à 0,16 mm pour des raisons notamment de résistance des fils et de coût industriel.

Un mode de réalisation avantageux consiste par exemple à choisir p₂ et p₃ compris entre 8 et 12 mm, avantageusement avec des câbles de structure 1+6+12.

De préférence, la gaine de caoutchouc présente une épaisseur moyenne allant de 0,010 mm à 0,040 mm.

D'une manière générale, lesdits au moins 85 % de câbles d'au moins une couche de l'armature de carcasse présentant au test dit de perméabilité un débit inférieur à 20 cm³/mn selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lesdits au moins 85 % de câbles d'au moins une couche de l'armature de carcasse présentant au test dit de perméabilité un débit inférieur à 20 cm³/mn selon l'invention pourront être obtenus selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon l'une quelconque des variantes de réalisation de l'invention, le nombre desdits au moins au moins 5 % de câbles comportant au moins un brin constitué de fibres multifilamentaires textiles adjacents est de préférence inférieur à 3.

Au sein d'une couche d'armature de carcasse des éléments de renforcement sont dits adjacents au sens de l'invention lorsqu'ils sont uniquement séparés l'un de l'autre par des mélanges polymériques.

Au-delà de trois câbles comportant au moins un brin constitué de fibres multifilamentaires textiles adjacents, les risques de dégradation ou bien de défauts d'apparence d'un pneumatique seraient accentués, notamment du fait des propriétés mécaniques moindres desdits câbles comparées à celles desdits au moins 85 % de câbles. Ce nombre de câbles comportant au moins un brin constitué de fibres multifilamentaires textiles adjacents est de préférence encore nul, c'est-à-dire que deux de ces câbles à couche comportant au moins un brin constitué de fibres multifilamentaires textiles ne sont jamais adjacents mais toujours séparés par au moins un câble métallique présentant au test dit de perméabilité un débit inférieur à 20 cm³/mn.

Avantageusement selon l'invention, le diamètre desdits au moins 5 % de câbles comportant au moins un brin constitué de fibres multifilamentaires textiles est compris entre 0.9 et 1.1 fois le diamètre des câbles métalliques présentant au test dit de perméabilité un débit inférieur à 20 cm³/mn.

Avantageusement encore, la force rupture desdits au moins 5 % de câbles comportant au moins un brin constitué de fibres multifilamentaires textiles est comprise entre 0.9 et 1.1 fois la force rupture des câbles métalliques présentant au test dit de perméabilité un débit inférieur à 20 cm³/mn.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 6 qui représentent :
- figure1, une vue méridienne d'un schéma d'un pneumatique selon un mode de réalisation de l'invention,
- figure 2, représentation schématique en coupe d'une couche d'armature de carcasse du pneumatique de la figure 1,
- figure 3, une représentation schématique d'une vue en coupe d'un premier exemple de câble représentant au moins 85 % des éléments de renforcement métalliques d'au moins une couche de l'armature de carcasse du pneumatique de la figure 1,
- figure 4, une représentation schématique d'une vue en coupe d'un deuxième exemple de câble représentant au moins 85 % des éléments de renforcement métalliques d'au moins une couche de l'armature de carcasse du pneumatique de la figure 1,
- figure 5, une représentation schématique d'un troisième exemple de câble représentant au moins 85 % des éléments de renforcement métalliques d'au moins une couche de l'armature de carcasse du pneumatique de la figure 1,
- figure 6, une représentation schématique d'un câble à couche comportant au moins un brin constitué de fibres multifilamentaires textiles.

Les figures ne sont pas représentées à l'échelle pour en simplifier la compréhension.

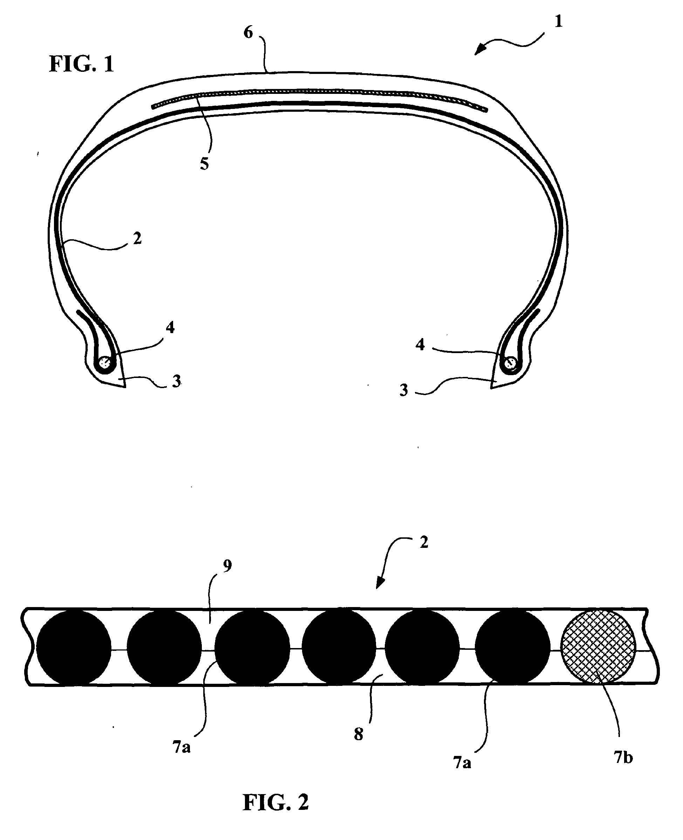

Sur la figure 1, le pneumatique 1, de dimension 315/70 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6. L'armature de sommet 5 est formée radialement de l'intérieur à l'extérieur :
- d'une première couche de travail formée de câbles métalliques inextensibles 11.35 non frettés, continus sur toute la largeur de la nappe, orientés d'un angle égal à 18°,
- d'une seconde couche de travail formée de câbles métalliques inextensibles 11.35 non frettés, continus sur toute la largeur de la nappe, orientés d'un angle égal à 18° et croisés avec les câbles métalliques de la première couche de travail,
- d'une couche de protection formées de câbles métalliques élastiques 6x35.

L'ensemble de ces couches constituant l'armature de sommet 5 n'est pas représenté en détail sur les figures.

La figure 2 illustre une représentation schématique en coupe d'une couche d'armature de carcasse 2 selon l'invention, la coupe étant réalisée dans un plan perpendiculaire à la direction d'orientation des éléments de renforcement. Celle-ci est constituée d'un ensemble de câbles 7a, 7b orientés parallèlement les uns par rapport aux autres et maintenus entre deux couches 8, 9 de mélange caoutchouteux, dites de calandrage.

Les éléments de renforcement 7a, les ronds pleins sur la figure 2, représentent les au moins 85 % de câbles métalliques non frettés présentant au test dit de perméabilité un débit inférieur à 20 cm³/mn et, dans le cas présent, de câbles non frettés à au moins deux couches, au moins une couche interne étant gainée d'une couche constituée d'une composition polymérique telle qu'une composition de caoutchouc réticulable ou réticulée. L'éléments 7b, le cercle hachuré sur la figure 2, représentent les au moins 5 % de câbles à couche comportant au moins un brin constitué de fibres multifilamentaires textiles.

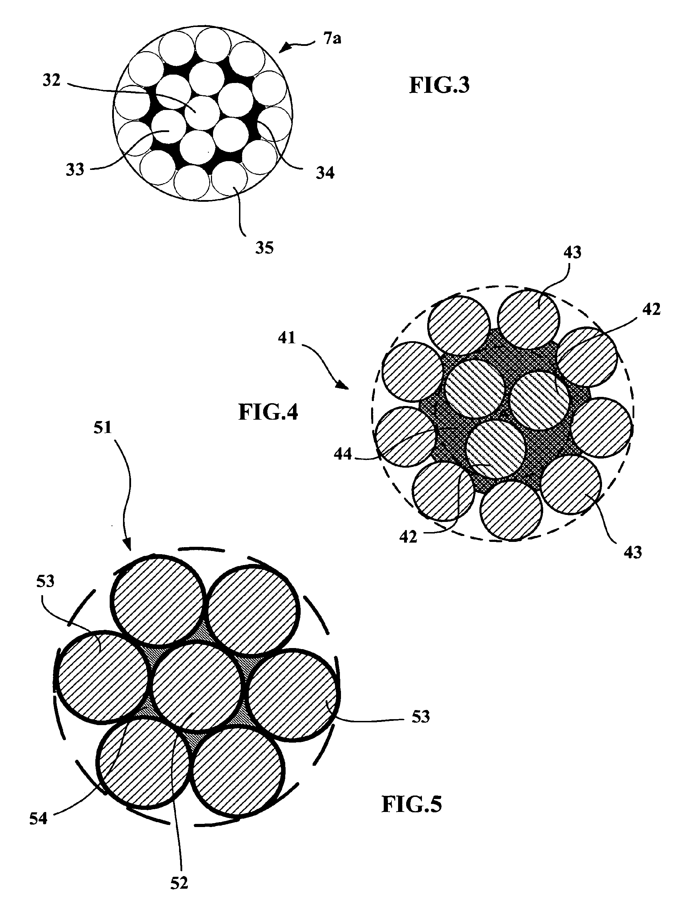

La figure 3 illustre une représentation schématique de la section d'un câble 7a d'armature de carcasse du pneumatique 1 de la figure 1. Ce câble 7a est un câble à couche de structure 1+6+12, non fretté, constitué d'un noyau central formée d'un fil 32, d'une couche intermédiaire formée de six fils 33 et d'une couche externe formée de douze fils 35.

Il présente les caractéristiques suivantes (d et p en mm) :
- structure 1+6+12 ;
- d₁ = 0.20 (mm);
- d₂ = 0.18 (mm);
- p₂ = 10 (mm)
- d₃ = 0.18 (mm);
- p₃ = 10 (mm),
- (d₂ / d₃) = 1 ;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 32 et de la couche intermédiaire formée des six fils 33 est gainé par une composition de caoutchouc 34 à base d'élastomère diénique non vulcanisé (à l'état cru). Le gainage est obtenu via une tête d'extrusion de l'âme constituée du fil 32 entouré des six fils 33, suivi d'une opération finale de retordage ou câblage des 12 fils 35 autour de l'âme ainsi gainée.

Le câble 7a présente au test dit de perméabilité, tel que décrit précédemment un débit égal à 0 cm³/mn et donc inférieur à 2 cm³/mn. Sa pénétration par la composition de caoutchouc est égale à 95 %.

Le câble 7a présente un diamètre égal à 0.95 mm.

La composition élastomérique constituant la gaine de caoutchouc 34 est réalisée à partir d'une composition telle que décrite précédemment et présente dans le cas présent la même formulation, à base de caoutchouc naturel et de noir de carbone, que celle des couches de calandrage 8, 9 de l'armature de carcasse que les câbles sont destinés à renforcer.

La figure 4 illustre une représentation schématique de la section d'un autre câble 41 d'armature de carcasse pouvant être utilisé dans un pneumatique selon l'invention en remplacement du câble de la figure 3, c'est-à-dire au titre desdits au moins 85 % de câbles non frettés à au moins deux couches, au moins une couche interne étant gainée d'une couche constituée d'une composition polymérique. Ce câble 41 est un câble à couche de structure 3+9, non fretté, constitué d'une âme centrale formée d'un câble constitué de trois fils 42 retordus entre eux et d'une couche externe formée de neuf fils 43.

Il présente les caractéristiques suivantes (d et p en mm) :
- structure 3+9 ;
- d₁ = 0.18 (mm);
- p₁ = 5 (mm)
- (d₁ / d₂) = 1 ;
- d₂ = 0.18 (mm);
- P₂ = 10 (mm),
avec d₁, p1, respectivement le diamètre et le pas d'hélice des fils de l'âme centrale et d₂ et p₂, respectivement le diamètre et le pas de d'hélice des fils de la couche externe.

L'âme centrale constituée d'un câble formé des trois fils 42 a été gainée par une composition de caoutchouc 44 à base d'élastomère diénique non vulcanisé (à l'état cru). Le gainage est obtenu via une tête d'extrusion du câble 42, suivi d'une opération finale de câblage des 9 fils 43 autour de l'âme ainsi gainée.

Le câble 41 présente au test dit de perméabilité, tel que décrit précédemment un débit égal à 0 cm³/mn et donc inférieur à 2 cm³/mn. Sa pénétration par la composition de caoutchouc est égale à 95 %.

Le câble 41 présente un diamètre égal à 1.0 mm.

La figure 5 illustre une représentation schématique de la section d'un autre câble 51 d'armature de carcasse pouvant être utilisé dans un pneumatique selon l'invention en remplacement du câble de la figure 3, c'est-à-dire au titre desdits au moins 85 % de câbles non frettés à au moins deux couches, au moins une couche interne étant gainée d'une couche constituée d'une composition polymérique. Ce câble 51 est un câble à couche de structure 1+6, non fretté, constitué d'un noyau central formé d'un fil 52 et d'une couche externe formée de six fils 53.

Il présente les caractéristiques suivantes (d et p en mm) :
- structure 1+6 ;
- d₁ = 0,200 (mm);
- (d₁ / d₂) = 1,14 ;
- d₂ = 0,175 (mm);
- p₂ = 10 (mm),
avec d₁, le diamètre du noyau et d₂ et p₂, respectivement le diamètre et le pas d'hélice des fils de la couche externe.

Le noyau central constitué du fil 52 a été gainée par une composition de caoutchouc 54 à base d'élastomère diénique non vulcanisé (à l'état cru). Le gainage est obtenu via une tête d'extrusion du fil 52, suivi d'une opération finale de câblage des 6 fils 53 autour du noyau ainsi gainé.

Le câble 51 présente au test dit de perméabilité, tel que décrit précédemment un débit égal à 0 cm³/mn et donc inférieur à 2 cm³/mn. Sa pénétration par la composition de caoutchouc est égale à 95 %.

Le câble 51 présente un diamètre égal à 0.75 mm.

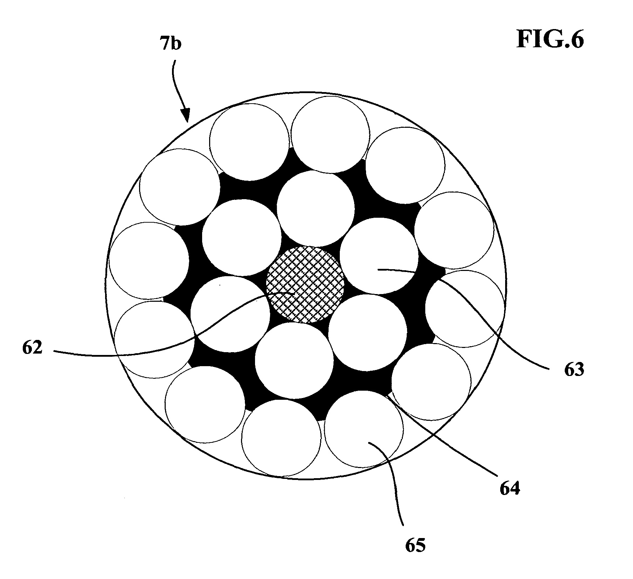

La figure 6 illustre une représentation schématique de la section d'un câble 7b d'armature de carcasse du pneumatique 1 de la figure 1. Ce câble 7b est un câble hybride à couche de structure 1+6+12, non fretté, constitué d'un noyau central formée d'un fil 61 constitué de fibres multifilamentaires polyamide aromatique, d'une couche intermédiaire formée de six fils métalliques 63 et d'une couche externe formée de douze fils métalliques 65.

Le noyau central est un câblé en polyamide aromatique 22/2/1 S200.

Il présente les caractéristiques suivantes (d et p en mm) :
- structure 1+6+12 ;
- d₁ = 0.22 (mm);
- d₂ = 0.18 (mm);
- p₂ = 10 (mm)
- d₃ = 0.18 (mm);
- P₃ = 10 (mm),
- (d₂ / d₃) = 1 ;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 62 en polyamide aromatique et de la couche intermédiaire formée des six fils 63 est gainé par une composition de caoutchouc 64 à base d'élastomère diénique non vulcanisé (à l'état cru). Le gainage est obtenu via une tête d'extrusion de l'âme constituée du fil 62 entouré des six fils 63, et suivi d'une opération finale de retordage ou câblage des 12 fils 65 autour de l'âme ainsi gainée.

Sur la figure 6, la gaine est représentée comme atteignant le noyau du câble 7b. Elle permet ainsi d'éviter les frottements entre les fils 63 de la couche intermédiaire mais la couche ne pénètre pas les fibres multifilamentaires du fil 62 pour conserver sa fonction de drain. Le fil 62 a, de manière connue, au préalable été encollé pour favoriser son adhérence à la composition de caoutchouc 64 qui pénètre jusqu'au noyau au moment de la cuisson du pneumatique, ladite colle faisant en outre barrage et empêchant la pénétration de la composition de caoutchouc entre les filaments du fil 62.

Le câble 7b est donc semblable au câble 7a de la figure 3 et diffère de celui-ci par son noyau qui n'est pas un fil métallique mais un fil ou brin constitué de fibres multifilamentaires polyamide aromatique.

Le câble 7b présente un diamètre égal à 0.95 mm.

La couche d'armature de carcasse du pneumatique 1 réalisée conformément à ces figures 1, 2 et 6 comporte des éléments de renforcement 7a pour 87 % et des éléments 7b pour 13 %.

Comme évoqué précédemment, d'autres types de câbles 7b, non représentés sur les figures, peuvent être utilisés. Il s'agit notamment de câbles textiles. A titre d'exemple, le câble 7b peut être un câble en polyamide aromatique 330x2 315/315. Un tel câble est constitué de deux brins de 330 filaments en polyamide aromatique, chaque brin étant retordu avec 315 torsions par mètre et enfin les deux brins étant assemblés avec une torsion équivalente à 315 tours par mètre dans le sens inverse de celle des brins. Le câble passe ensuite par une étape d'encollage afin de déposer une colle favorisant l'adhérence entre ledit câble et les mélanges élastomériques des couches de calandrage. Un tel câble présente un diamètre égal à 1.0 mm.

Une couche d'armature de carcasse réalisée conformément à l'invention avec un tel câble comporterait des éléments de renforcement 7a pour 94 % et des éléments 7b pour 6%.

D'autres exemples de câbles textiles, également non représentés sur les figures, peuvent être utilisés pour l'invention. Il s'agit par exemples de câbles en polyamide aromatique 252x3 265/265 qui présentent un diamètre de 0.96 mm ou bien de câbles en polyéthylène naphtalate 167x2x2 210/210 qui présentent un diamètre de 0.94 mm.

Des essais ont été réalisés avec des pneumatiques réalisés selon l'invention conformément à la représentation des figures 1, 2, 3 et 6, et d'autres avec des pneumatiques dits de référence.

Les pneumatiques de référence diffèrent des pneumatiques selon l'invention par une armature de carcasse dont les éléments de renforcement sont des câbles tels que ceux représentés sur la figure 3 mais qui ne comportent pas de couche de gainage. L'armature de carcasse ne comporte également pas de câbles à couche comportant au moins un brin constitué de fibres multifilamentaires textiles comme celle de l'invention.

Aucun des pneumatiques ainsi réalisés, que ce soit les pneumatiques selon l'invention ou bien les pneumatiques de référence, ne présentent de défaut d'aspect imputable à la présence d'air ou d'humidité.

Des essais d'endurance en roulage sur volant ont été réalisés sur une machine de tests imposant aux pneumatiques une charge de 4415 daN et une vitesse de 40 km/h, avec un gonflage des pneumatiques dopé en oxygène. Les essais ont été réalisés pour les pneumatiques selon l'invention avec des conditions identiques à celles appliquées aux pneumatiques de référence. Les roulages sont arrêtés dès que les pneumatiques présentent des dégradations de l'armature de carcasse.

Les essais ainsi réalisés ont montré que les distances parcourues lors de chacun de ces tests sont favorables pour les pneumatiques selon l'invention qui totalisent 300000 km alors que les pneumatiques de référence n'ont parcourus que 250 000 km.

D'autres essais d'endurance en roulage sur essieu moteur de véhicule ont été réalisés en imposant aux pneumatiques une charge de 3680 daN et une vitesse de 40 km/h, avec un gonflage des pneumatiques de 0.2 bar. Les essais ont été réalisés pour les pneumatiques selon l'invention avec des conditions identiques à celles appliquées aux pneumatiques de référence. Les roulages sont menés sur une distance de 12 000 km ou sont arrêtés dès que les pneumatiques présentent des dégradations de l'armature de carcasse.

Les essais ainsi réalisés ont montré que les distances parcourues lors de chacun de ces tests avec les pneumatiques selon l'invention ont toujours permis d'atteindre les 12 000 km alors que les pneumatiques de référence n'ont parcouru au maximum que 10 000 km.

En outre, d'autres types de pneumatiques ont été fabriqués. Ces pneumatiques diffèrent des pneumatiques selon l'invention par une armature de carcasse ne comportant que des câbles 7a tels que représentés sur la figure 3.

Il s'avère qu'une majorité de ces pneumatiques présentent des défauts d'aspect sur les flancs du fait de la présence de poches d'air qui les rendent non commercialisables. La réalisation de pneumatiques conformes à l'invention permet de diminuer considérablement le taux de pneumatiques non commercialisables du fait de ce type de défaut en comparaison des pneumatiques dont l'armature de carcasse ne comporte que des câbles tels que représentés sur la figure 3.

## Revendications

1. Pneumatique (1) à armature de carcasse radiale, constituée d'au moins une couche (2) d'éléments de renforcement, ledit pneumatique comprenant une armature de sommet (5), elle-même coiffée radialement d'une bande de roulement (6), ladite bande de roulement étant réunie à deux bourrelets (3) par l'intermédiaire de deux flancs, **caractérisé en ce qu'**au moins 85 % des éléments de renforcement d'au moins une couche (2) de l'armature de carcasse sont des câbles métalliques non frettés (7a) présentant au test dit de perméabilité un débit inférieur 20 cm³/mn, et **en ce qu'**au moins 5 % des éléments de renforcement de ladite au moins une couche de l'armature de carcasse sont des câbles (7b) comportant au moins un brin constitué de fibres multifilamentaires textiles.

2. Pneumatique (1) selon la revendication 1, **caractérisé en ce que** lesdits au moins 85 % des éléments de renforcement métalliques d'au moins une couche (2) de l'armature de carcasse présentant au test dit de perméabilité un débit inférieur à 20 cm³/mn sont des câbles (7a) à au moins deux couches et **en ce qu'**au moins une couche interne est gainée d'une couche (34) constituée d'une composition polymérique telle qu'une composition de caoutchouc réticulable ou réticulée, de préférence à base d'au moins un élastomère diénique.

3. Pneumatique (1) selon la revendication 1 ou 2, **caractérisé en ce que** les câbles (7a) présentent au test dit de perméabilité un débit inférieur à 10 cm³/mn et de préférence inférieur à 2 cm³/mn

4. Pneumatique (1) selon l'une des revendications 1 à 3, en ce que lesdits au moins 5 % des éléments de renforcement de ladite au moins une couche (2) de l'armature de carcasse sont des câbles textiles (7b).

5. Pneumatique (1) selon la revendication 4, **caractérisé en ce que** les câbles textiles (7b) représentent au plus 10 % des éléments de renforcement de ladite au moins une couche (2) de l'armature de carcasse.

6. Pneumatique (1) selon l'une des revendications 1 à 3, **caractérisé en ce que** lesdits au moins 5 % des éléments de renforcement de ladite au moins une couche (2) de l'armature de carcasse sont des câbles hybrides (7b) comportant au moins un brin métallique.

7. Pneumatique (1) selon la revendication 6, **caractérisé en ce que** lesdits au moins 5 % des éléments de renforcement de ladite au moins une couche (2) de l'armature de carcasse sont des câbles à couches (7b), **en ce que** le noyau comporte au moins un brin ou fil constitué de fibres multifilamentaires textiles et **en ce que** les brins des couches intermédiaire et/ou externe sont métalliques.

8. Pneumatique (1) selon la revendication 6 ou 7, **caractérisé en ce que** les câbles hybrides (7b) représentent au moins 10 % des éléments de renforcement de ladite au moins une couche de l'armature de carcasse.

9. Pneumatique (1) selon l'une des revendications 6 à 8, **caractérisé en ce que** les câbles hybrides (7b) sont des câbles à au moins trois couches et **en ce qu'**au moins une couche intermédiaire est gainée d'une couche (64) constituée d'une composition polymérique telle qu'une composition de caoutchouc réticulable ou réticulée, de préférence à base d'au moins un élastomère diénique.

10. Pneumatique (1) selon l'une des revendications 1 à 9, **caractérisé en ce que** lesdits au moins 85 % des éléments de renforcement métalliques d'au moins une couche de l'armature de carcasse sont des câbles (7a) métalliques à couches de construction [L+M] ou [L+M+N], comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu'**une gaine (34) constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

11. Pneumatique (1) selon la revendication 10, **caractérisé en ce que** le diamètre des fils de la première couche C1 est compris entre 0.10 et 0.5 mm, et **en ce que** le diamètre des fils des couches C2, C3 est compris entre 0.10 et 0.5 mm.

12. Pneumatique (1) selon la revendication 10 ou 11, **caractérisé en ce que** le pas d'hélice d'enroulement desdits fils de la couche externe C3 est compris entre 8 et 25 mm.

13. Pneumatique (1) selon l'une des revendications 2 à 12, **caractérisé en ce que** l'élastomère diénique est choisi dans le groupe constitué par les polybutadiènes, le caoutchouc naturel, les polyisoprènes de synthèse, les copolymères de butadiène, les copolymères d'isoprène, et les mélanges de ces élastomères.

14. Pneumatique (1) selon l'une des revendications 2 à 13, **caractérisé en ce que** la composition de caoutchouc réticulable ou réticulée à base d'au moins un élastomère diénique présente à l'état réticulé un module sécant en extension inférieur à 20 MPa et de préférence, inférieur à 12 MPa.

## Patentansprüche

1. Luftreifen (1) mit radialer Karkassenbewehrung, die aus mindestens einer Schicht (2) von Verstärkungselementen besteht, wobei der Luftreifen eine Scheitelbewehrung (5) enthält, die selbst radial von einem Laufstreifen (6) überlagert wird, wobei der Laufstreifen mittels zweier Flanken mit zwei Wülsten (3) verbunden ist, **dadurch gekennzeichnet, dass** mindestens 85 % der Verstärkungselemente mindestens einer Schicht (2) der Karkassenbewehrung nicht bandagierte Metallkabel (7a) sind, die beim so genannten Permeabilitätstest einen Durchsatz von weniger als 20 cm³/mn haben, und dass mindestens 5 % der Verstärkungselemente der mindestens einen Schicht der Karkassenbewehrung Kabel (7b) sind, die mindestens einen aus mehrfädigen Textilfasern bestehenden Einzeldraht aufweisen.

2. Luftreifen (1) nach Anspruch 1, **dadurch gekennzeichnet, dass** die mindestens 85 % der metallischen Verstärkungselemente mindestens einer Schicht (2) der Karkassenbewehrung, die beim so genannten Permeabilitätstest einen Durchsatz von weniger als 20 cm³/mn haben, Kabel (7a) mit mindestens zwei Schichten sind, und dass mindestens eine Innenschicht mit einer Schicht (34) umhüllt ist, die aus einer Polymerzusammensetzung wie einer vernetzbaren oder vernetzten Kautschukzusammensetzung besteht, vorzugsweise auf der Basis mindestens eines Dienelastomers.

3. Luftreifen (1) nach Anspruch 1 oder 2, **dadurch gekennzeichnet, dass** die Kabel (7a) beim so genannten Permeabilitätstest einen Durchsatz von weniger als 10 cm³/mn und vorzugsweise weniger als 2 cm³/mn haben.

4. Luftreifen (1) nach einem der Ansprüche 1 bis 3, **dadurch gekennzeichnet, dass** die mindestens 5 % der Verstärkungselemente der mindestens einen Schicht (2) der Karkassenbewehrung Textilkabel (7b) sind.

5. Luftreifen (1) nach Anspruch 4, **dadurch gekennzeichnet, dass** die Textilkabel (7b) höchstens 10 % der Verstärkungselemente der mindestens einen Schicht (2) der Karkassenbewehrung darstellen.

6. Luftreifen (1) nach einem der Ansprüche 1 bis 3, **dadurch gekennzeichnet, dass** die mindestens 5 % der Verstärkungselemente der mindestens einen Schicht (2) der Karkassenbewehrung Hybridkabel (7b) sind, die mindestens einen metallischen Einzeldraht aufweisen.

7. Luftreifen (1) nach Anspruch 6, **dadurch gekennzeichnet, dass** die mindestens 5 % der Verstärkungselemente der mindestens einen Schicht (2) der Karkassenbewehrung Schichtkabel (7b) sind, dass der Kern mindestens einen Einzeldraht oder Draht aufweist, der aus mehrfädigen Textilfasern besteht, und dass die Einzeldrähte der Zwischen- und/oder Außenschichten metallisch sind.

8. Luftreifen (1) nach Anspruch 6 oder 7, **dadurch gekennzeichnet, dass** die Hybridkabel (7b) mindestens 10 % der Verstärkungselemente der mindestens einen Schicht der Karkassenbewehrung darstellen.

9. Luftreifen (1) nach einem der Ansprüche 6 bis 8, **dadurch gekennzeichnet, dass** die Hybridkabel (7b) Kabel mit mindestens drei Schichten sind, und dass mindestens eine Zwischenschicht mit einer Schicht (64) umhüllt ist, die aus einer Polymerzusammensetzung wie einer vernetzbaren oder vernetzten Kautschukzusammensetzung besteht, vorzugsweise auf der Basis mindestens eines Dienelastomers.

10. Luftreifen (1) nach einem der Ansprüche 1 bis 9, **dadurch gekennzeichnet, dass** die mindestens 85 % der metallischen Verstärkungselemente mindestens einer Schicht der Karkassenbewehrung metallische Kabel (7a) mit Aufbauschichten [L+M] oder [L+M+N] sind, die eine erste Schicht C1 aus L Drähten eines Durchmessers d₁, mit L von 1 bis 4, umgeben von mindestens einer Zwischenschicht C2 aus M Drähten eines Durchmessers d₂, aufweisen, die gemäß einer Steigung p₂ zusammen schraubenförmig aufgewickelt sind, mit M von 3·bis 12, wobei die Schicht C2 ggf. von einer Außenschicht C3 aus N Drähten eines Durchmessers d₃ umgeben ist, die gemäß einer Steigung p₃ zusammen schraubenförmig aufgewickelt sind, mit N von 8 bis 20, und dass eine aus einer vernetzbaren oder vernetzten Kautschukzusammensetzung auf der Basis mindestens eines Dienelastomers bestehende Hülle (34) in dem Aufbau [L+M] die erste Schicht C1 und in dem Aufbau [L+M+N] mindestens die Schicht C2 bedeckt.

11. Luftreifen (1) nach Anspruch 10, **dadurch gekennzeichnet, dass** der Durchmesser der Drähte der ersten Schicht C1 zwischen 0,10 und 0,5 mm liegt, und dass der Durchmesser der Drähte der Schichten C2, C3 zwischen 0,10 und 0,5 mm liegt.

12. Luftreifen (1) nach Anspruch 10 oder 11, **dadurch gekennzeichnet, dass** die Aufwickel-Gewindesteigung der Drähte der Außenschicht C3 zwischen 8 und 25 mm liegt.

13. Luftreifen (1) nach einem der Ansprüche 2 bis 12, **dadurch gekennzeichnet, dass** das Dienelastomer aus der Gruppe ausgewählt wird, die aus den Polybutadienen, dem natürlichen Kautschuk, den synthetischen Polyisoprenen, den Butadien-Copolymeren, den Isopren-Copolymeren und den Mischungen dieser Elastomere besteht.

14. Luftreifen (1) nach einem der Ansprüche 2 bis 13, **dadurch gekennzeichnet, dass** die vernetzbare oder vernetzte Kautschukzusammensetzung auf der Basis mindestens eines Dienelastomers im vernetzten Zustand einen Sekanten-Dehnungsmodul von weniger als 20 MPa und vorzugsweise weniger als 12 MPa hat.

## Claims

1. Tyre (1) having a radial carcass reinforcement, consisting of at least one layer (2) of reinforcing elements, said tyre comprising a crown reinforcement (5), which is itself covered radially with a tread (6), said tread being joined to two beads (3) via two sidewalls, **characterized in that** at least 85% of the reinforcing elements of at least one layer (2) of the carcass reinforcement are non-wrapped metal cords (7a) having in what is called the permeability test a flow rate of less than 20 cm³/min, and **in that** at least 5% of the reinforcing elements of said at least one layer of the carcass reinforcement are cords (7b) comprising at least one strand consisting of textile multifilament yarns.

2. Tyre (1) according to Claim 1, **characterized in that** said at least 85% of the metal reinforcing elements of at least one layer (2) of the carcass reinforcement having in what is called the permeability test a flow rate of less than 20 cm³/min are cords having at least two layers and **in that** at least one inner layer is sheathed with a layer (34) consisting of a polymeric composition such as a crosslinkable or crosslinked rubber composition, preferably one based on at least one diene elastomer.

3. Tyre (1) according to Claim 1 or 2, **characterized in that** the cords (7a) have in what is called the permeability test a flow rate of less than 10 cm³/min and preferably less than 2 cm³/min.

4. Tyre (1) according to one of Claims 1 to 3, **characterized in that** said at least 5% of the reinforcing elements of said at least one layer (2) of the carcass reinforcement are textile cords (7b).

5. Tyre (1) according to Claim 4, **characterized in that** the textile cords (7b) represent at most 10% of the reinforcing elements of said at least one layer (2) of the carcass reinforcement.

6. Tyre (1) according to one of Claims 1 to 3, **characterized in that** said at least 5% of the reinforcing elements of said at least one layer (2) of the carcass reinforcement are hybrid cords (7b) comprising at least one metal strand.

7. Tyre (1) according to Claim 6, **characterized in that** said at least 5% of the reinforcing elements of said at least one layer (2) of the carcass reinforcement are layered cords (7b), **in that** the core comprises at least one strand or thread consisting of textile multifilament yarns and **in that** the strands of the intermediate and/or outer layers are metal strands.

8. Tyre (1) according to Claim 6 or 7, **characterized in that** the hybrid cords (7b) represent at least 10% of the reinforcing elements of said at least one layer of the carcass reinforcement.

9. Tyre (1) according to one of Claims 6 to 8, **characterized in that** the hybrid cords (7b) are cords having at least three layers and **in that** at least one intermediate layer is sheathed with a layer (64) consisting of a polymeric composition such as a crosslinkable or crosslinked rubber composition, preferably one based on at least one diene elastomer.

10. Tyre (1) according to one of Claims 1 to 9, **characterized in that** said at least 85% of the metal reinforcing elements of at least one layer of the carcass reinforcement are layered metal cords (7a) of [L+M] or [L+M+N] construction, comprising a first layer C1 having L threads of diameter d₁ where L ranges from 1 to 4, surrounded by at least one intermediate layer C2 having M threads of diameter d₂ wound together in a helix with a pitch p₂ where M ranges from 3 to 12, said layer C2 being optionally surrounded by an outer layer C3 of N threads of diameter d₃ wound together in a helix with a pitch p₃ where N ranges from 8 to 20, and **in that** a sheath (34) consisting of a crosslinkable or crosslinked rubber composition based on at least one diene elastomer covers, in the [L+M] construction, said first layer C1 and, in the [L+M+N] construction, at least said layer C2.

11. Tyre (1) according to Claim 10, **characterized in that** the diameter of the threads of the first layer C1 is between 0.10 and 0.5 mm, and **in that** the diameter of the threads of the layers C2, C3 is between 0.10 and 0.5 mm.

12. Tyre (1) according to Claim 10 or 11, **characterized in that** said threads of the outer layer C3 are helically wound with a helix pitch of between 8 and 25 mm.

13. Tyre (1) according to one of Claims 2 to 12, **characterized in that** the diene elastomer is selected from the group consisting of polybutadienes, natural rubber, synthetic polyisoprenes, butadiene copolymers, isoprene copolymers, and blends of these elastomers.

14. Tyre (1) according to one of Claims 2 to 13, **characterized in that** the crosslinkable or crosslinked rubber composition based on at least one diene elastomer has, in the crosslinked state, a secant modulus in extension of less than 20 MPa and preferably less than 12 MPa.
